# EUROPÄISCHE PATENTSCHRIFT

(11) **EP 1 777 176 B1**
(45) Veröffentlichungstag und Bekanntmachung des Hinweises auf die Patenterteilung: **07.10.2009**
(21) Anmeldenummer: 06019752.2
(22) Anmeldetag: 21.09.2006
(51) Int. Cl.: B65G 21/20

(54) **Vorrichtung für den insbesondere hängenden Transport von Transportgütern mittels Unterdruck sowie Transportriemen hierfür**
Conveyor in particular for hanging transport of goods using vacuum means and belt therefore
Convoyeur en particulier pour le transport suspendu par dépression de marchandises et courroie associé

(30) Priorität: 20.10.2005 DE 102005050687
(43) Veröffentlichungstag der Anmeldung: 25.04.2007
(73) Patentinhaber: NSM Magnettechnik GmbH, 59399 Olfen (DE)
(72) Erfinder: Holtmann, Michael, 48151 Münster (DE); Möller, Jörg, 59379 Selm (DE)
(74) Vertreter: Hennicke, Ernst Rüdiger

(56) Entgegenhaltungen:
- EP-A1- 1 081 067
- EP-A2- 0 827 919
- US-A- 6 102 191

## Beschreibung

Die Erfindung betrifft eine Vorrichtung für den insbesondere hängenden Transport von Transportgütern mittels Unterdruck, mit mindestens einem umlaufenden Transportriemen, an dessen außenliegender Kontaktseite sich die zu transportierenden Transportgüter während des Transports anlegen, und mit mindestens einer seitlich neben dem Transportriemen wirksamen Unterdruckeinrichtung. Die Erfindung ist ferner auf einen Transportriemen gerichtet, wie er insbesondere in einem Vakuumförderer der erfindungsgemäßen Gattung eingesetzt werden kann.

Aus der EP 1 081 067 A1 ist eine Bandfördereinrichtung für den hängenden Transport von Blechen u.dgl. mittels Unterdruck bekannt, bei der der bzw. die Transportriemen seitlich neben der Unterdruckeinrichtung angeordnet sind, so daß der zum Halten der zu transportierenden Bauteile erforderliche Unterdruck nicht an dem Transportriemen selbst durch an diesem angeordnete Sauger oder Unterdruckkammern zur Verfügung gestellt wird, sondern stationär unmittelbar neben den Transportriemen erzeugt wird. Die Bleche oder anderen zu transportierenden Bauteile werden mit Hilfe von Ansaugdüsen angesaugt und gegen die Transportseite der Transportriemen gedrückt.

Die bekannte Vorrichtung hat sich in der Praxis bewährt, denn mit ihr wurde der Verschleiß am Transportriemen erheblich verringert gegenüber den Vorrichtungen, bei denen der Unterdruck durch den Transportriemen hindurch in an diesem angeordneten Saugern od.dgl. erzeugt werden mußte. Von Nachteil bei der bekannten Vorrichtung ist jedoch der vergleichsweise große Energieaufwand, der betrieben werden muß, um den zum Halten insbesondere schwerer Bleche erforderlichen Unterdruck bereitzustellen, denn die von den Ansaugdüsen bzw. der Unterdruckeinrichtung zur Verfügung stehende Fläche, an der der Unterdruck am zu transportierenden Bauteil tatsächlich wirksam ist, ist vergleichsweise gering, so daß für ein sicheres Transportieren der Transportgüter ein vergleichsweise großer Druckgradient erforderlich ist.

Aufgabe der Erfindung ist es, diesen Nachteil zu vermeiden und eine Vorrichtung der gattungsgemäßen Art so auszubilden und einen Transportriemen hierfür zu schaffen, womit ein sicherer Transport von zu transportierenden Bauteilen mittels Unterdruck auch mit einem geringeren Druckgradienten möglich ist.

Diese Aufgabe wird mit einer gattungsgemäßen Vorrichtung dadurch gelöst, daß der Transportriemen an seiner Kontaktseite mit einerseits zum Transportgut und andererseits zur Unterdruckeinrichtung hin offenen Unterdrucktaschen versehen ist. Der erfindungsgemäße Transportriemen ist also dadurch gekennzeichnet, daß er an seiner im Einbauzustand am Vakuumförderer zum transportierenden Transportgut hin weisenden Kontaktseite mit einerseits zu einer der beiden Längsaußenseiten und andererseits zum Transportgut hin offenen Unterdrucktaschen versehen ist.

Die erfindungsgemäße Ausgestaltung bewirkt eine erhebliche Vergrößerung der am Transportgut wirksamen Haltefläche, an der der von der Unterdruckeinrichtung erzeugte Unterdruck herrscht, womit die auf das zu transportierende Blech od.dgl. wirksame Haltekraft entsprechend größer ist bzw. wodurch bei gegebener, zu erzeugender Haltekraft mit einem geringeren Druckgradienten gegenüber dem Umgebungsdruck gearbeitet werden kann, um diese geforderte Haltekraft zu erzielen. Der am zu transportierenden Bauteil angreifende Unterdruck wird nämlich nicht nur im Bereich der Unterdruckeinrichtung selbst, also seitlich neben dem Transportriemen erzeugt, sondern auch am Transportriemen selbst, indem die an diesem angeordneten Unterdrucktaschen über die sich an den zur Unterdruckeinrichtung hin weisenden Längsaußenseiten ausbildenden Schlitzöffnungen (teilweise) evakuiert werden. Der das Bauteil gegen den bzw. die Transportriemen haltende Unterdruck ist also nicht nur in dem vergleichsweise schmalen Bereich der Unterdruckeinrichtung seitlich neben dem bzw. den Transportriemen wirksam, sondern auch in den Unterdrucktaschen. Dies bedeutet, daß die wirksame Ansaugfläche erheblich vergrößert ist und dementsprechend eine geringere Druckdifferenz zum tlntgebungsdruck ausreicht, das Bauteil sicher am Förderer zu halten.

Vorzugsweise verlaufen die Unterdrucktaschen im wesentlichen quer zur Längsrichtung des Transportriemens. Sie können in Form von flachen, zur Seite der Unterdruckeinrichtung hin offenen Nuten in der Kontaktseite des Transportriemens angeordnet sein und in diesem beispielsweise durch Einfräsen hergestellt werden. Vorzugsweise weisen die Unterdrucktaschen eine im Verhältnis zu ihrem Volumen große wirksame Fläche zum Transportgut hin auf, so daß sie von der Seite her mittels der Unterdruckeinrichtung wegen ihres geringen Volumens sehr schnell evakuiert werden und aufgrund ihrer großen wirksamen Ansaugfläche schon bei geringer Druckdifferenz eine große Haltekraft auf das Transportgut ausüben können.

Die Tiefe der Unterdrucktaschen kann ausgehend von ihrer zur Unterdruckeinrichtung hin weisenden, offenen Seite zu ihrem gegenüberliegenden Ende hin abnehmen. Vorzugsweise erstrecken sich die Unterdrucktaschen über mindestens die halbe Breite des Transportriemens-In weiterer vorteilhafter Ausgestaltung der Erfindung sind die Unterdrucktaschen in regelmäßigen Abständen an der Kontaktseite des Transportriemens angeordnet. Die Anordnung ist zweckmäßig so getroffen, daß der Abstand zwischen zwei aufeinanderfolgenden Unterdrucktaschen gleich groß oder größer ist als deren Abmessung in Längsrichtung des Transportriemens, d.h. es verbleibt zwischen zwei Taschen immer ausreichend viel Material an der Kontaktseite des Transportriemens, um den sicheren Kontakt mit dem zu transportierenden Transportgut über die gesamte Riemenbreite sicherzustellen. Darüber hinaus verhindern die zwischen zwei Unterdrucktaschen verbleibenden Stege zuverlässig, daß an den vorderen und hinteren Stirnseiten eines zu transportierenden Blechs od.dgl. unnötig viel Falschluft vom Unterdruckerzeuger angesaugt werden kann, was sich nachteilig auf die Haltekraft auswirken würde.

Eine besonders vorteilhafte Ausgestaltung der erfindungsgemäßen Vorrichtung ergibt sich, wenn zu beiden Seiten der Unterdruckeinrichtung je ein Transportriemen angeordnet ist, deren Unterdrucktaschen zur dazwischen angeordneten Unterdruckeinrichtung hin offen sind, also eine achsensymmetrische Anordnung zur in Transportrichtung verlaufenden Längsachse der Unterdruckeinrichtung.

Weitere Merkmale und Vorteile der Erfindung ergeben sich aus der nachfolgenden Beschreibung und der Zeichnung, worin eine bevorzugte Ausführungsform der Erfindung anhand eines Beispiels näher erläutert ist. Es zeigt:
- Fig. 1: eine Uhterdruck-Bandfördervorrichtung nach der Erfindung in schematisierter Darstellung im Querschnitt;
- Fig. 2: eine Einzelheit II nach Fig. 1; und
- Fig. 3: eine Unteransicht auf die Fördervorrichtung in Richtung III nach Fig. 2.

Die erfindungsgemäße, in der Zeichnung vereinfacht dargestellte Bandfördervorrichtung entspricht in ihrem grundsätzlichen Aufbau einer Vorrichtung, wie sie beispielsweise aus der EP 1 081 067 bekannt ist, auf deren Offenbarungsgehalt hiermit zur Erläuterung der Wirkungsweise solcher Vorrichtungen Bezug genommen wird.

Die erfindungsgemäße Bandfördervorrichtung hat eine kastenförmige Tragkonstruktion 10, um die zwei Transportriemen 11 umlaufend angeordnet sind. Wie an sich bekannt, verlaufen dabei an der Oberseite der Tragkonstruktion die Leertrume 12 der Transportriemen 11, während sich ihre Lasttrume 13 an eine unten an der Tragkonstruktion 10 angeordnete Haltebahn 14 anlegen. Damit die Lasttrume 13 unten an der Tragkonstruktion nicht durchhängen, werden sie an ihren Längsaußenseiten 15 von an der Tragkonstruktion angeschraubten Halteblechen 16 unterfaßt und in ähnlicher Weise an ihren Längsinnenseiten 17 von einem seitlich vorragenden Kragen 18 gehalten, der eine zwischen den beiden Lasttrumen 13 der Transportriemen im Inneren der Tragkonstruktion angeordnete Unterdruckeinrichtung 19 seitlich begrenzt. Die Anordnung ist dabei so getroffen, daß die Haltebleche 16 und der Kragen 18 jeweils in entlang der Längsaußen- und Innenseiten an der Unterseite der Lasttrume 13 angeordnete Ausnehmungen 20a, b fassen und die zwischen den Ausnehmungen sich erstreckende Kontaktseite 21 der Transportriemen ein kleines Stück nach unten von den Halteblechen und dem Kragen vorsteht, so daß ein mit Hilfe der Vorrichtung transportiertes Blech 22 nur an der Kontaktseite 21 der Lasttrume 13 der Transportriemen 11 anliegt und die Haltebleche und den Kragen nicht berührt.

Für den Transport der Bleche 22 werden diese mittels eines mit der Unterdruckeinrichtung 19 erzeugten Unterdruckes gegen die Kontaktseiten 21 der Transportriemen 11 gedrückt, während diese um die Tragkonstruktion 10 umlaufen und dabei die Bleche von einer (nicht dargestellten) Blechübernahmeposition zu einer Abwurfposition transportieren, wie dies bei Unterdruckförderern für den hängenden Transport von Blechen oder Transportgütern bekannt ist. Um hierbei die wirksame Ansaugfläche gegenüber vorbekannten Vorrichtungen zu vergrößern und hierdurch bei gegebenem, beispielsweise von einem Gebläse 23 an der Unterdruckeinrichtung 19 erzeugten Unterdruck eine größere Haltekraft zu erzeugen, sind die Transportriemen erfindungsgemäß an ihren Kontaktseiten 21 mit Unterdrucktaschen 24 versehen, die einerseits an den Längsinnenseiten 17 der Transportriemen 11 zur Unterdruckeinrichtung 19 hin offen sind und andererseits zu den Blechen 22 hin, die sich von unten an die Kontaktseite 21 der Transportriemen 11 anlegen. Die Unterdrucktaschen 24 verlaufen quer zur Längs- und damit zur Förderrichtung 25 der Transportriemen 11 und haben die Form von flachen, zur Längsinnenseite 17 der Transportriemen 11 hin offenen Nuten, die an der Kontaktseite aus den Transportriemen ausgefräst oder in anderer geeigneter Weise hergestellt sind. Die Anordnung ist dabei so getroffen, daß die Unterdrucktaschen eine im Verhältnis zu ihrem Volumen große wirksame Fläche zu den Transportgütern hin aufweisen, d.h. die Unterdrucktaschen haben nur eine verhältnismäßig geringe Tiefe, die nicht mehr als 1mm betragen muß, sind aber ausgehend von den Längsinnenseiten der Transportriemen vergleichsweise lang und erstrecken sich über mindestens die halbe Breite des Transportriemens und haben auch in Längsrichtung 25 der Riemen eine Abmessung von einigen Millimetern vorzugsweise mehr als 10mm. Bei einem bevorzugten Ausführungsbeispiel hat jede Unterdrucktasche eine quer zur Bandlängsrichtung verlaufende Länge von 33 mm und eine Breite von 17 mm, bewirkt also einen Zuwachs wirksamer Ansaugfläche von 561 mm². Mit einer 100 mm langen, zu transportierenden Platine können insgesamt.maximal zehn Unterdrucktaschen überdeckt werden, nämlich je fünf in jedem der beiden Transportriemen. Diese bedeutet eine zusätzlich wirksame Ansaugfläche von 5610 mm². Bei einer Breite der Unterdruckeinrichtung 19 bzw. des von dieser gebildeten Haltekanals 26 von nur 26 mm beträgt die dort wirksame (primäre) Ansaugfläche für dieselbe Platinenlänge lediglich 2600 mm². Man erkennt anhand dieser Zahlen die bemerkenswerte Steigerung der wirksamen Ansaugfläche auf über das Dreifache der primären Ansaugfläche im Bereich des Haltekanals..

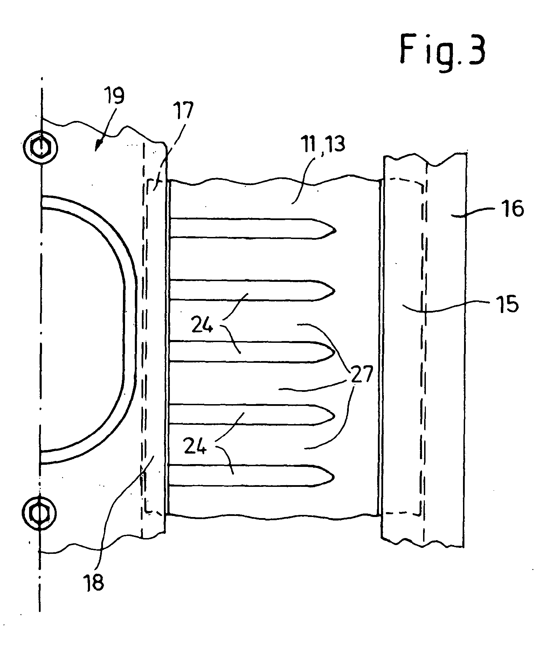

Das Verhältnis von der Oberfläche der in einem Transportriemen angeordneten Unterdrucktaschen 24 zur Kontaktseite der Transportriemen, also der von deren Länge und an den Blechen anliegender Breite definierten Fläche kann - wie in Fig.3 angedeutet - aber auch niedriger sein als bei dem vorstehend dargelegten Zahlenbeispiel. Z.B. kann dieses Verhältnis bei gut 30% liegen, d.h. (nur) gut 30% der gesamten Fläche der Transportriemen stehen dann in Form der Unterdrucktaschen 24 als zusätzliche Haltefläche neben dem sich zwischen der Unterdruckeinrichtung 19 und dem Blech 22 ausbildenden Haltekanal zum Halten der Bleche zur Verfügung.

Man erkennt, daß die Unterdrucktaschen in regelmäßigen Abständen an der Kontaktseite 21 der Transportriemen 11 angeordnet sind, wobei die zwischen zwei benachbarten Unterdrucktaschen verbleibenden Stege 27 nicht nur dafür sorgen, daß sich die Bleche 22 über die gesamte Breite der Kontaktseite an den Transportriemen 11 anlegen können, sondern auch wirksam verhindern, daß von der Unterdruckeinrichtung an den vorderen und hinteren Stirnseiten der transportierten Bleche Falschluft über die Breite des Haltekanals 26 hinaus auch im Bereich der daneben laufenden Transportriemen angesaugt werden kann.

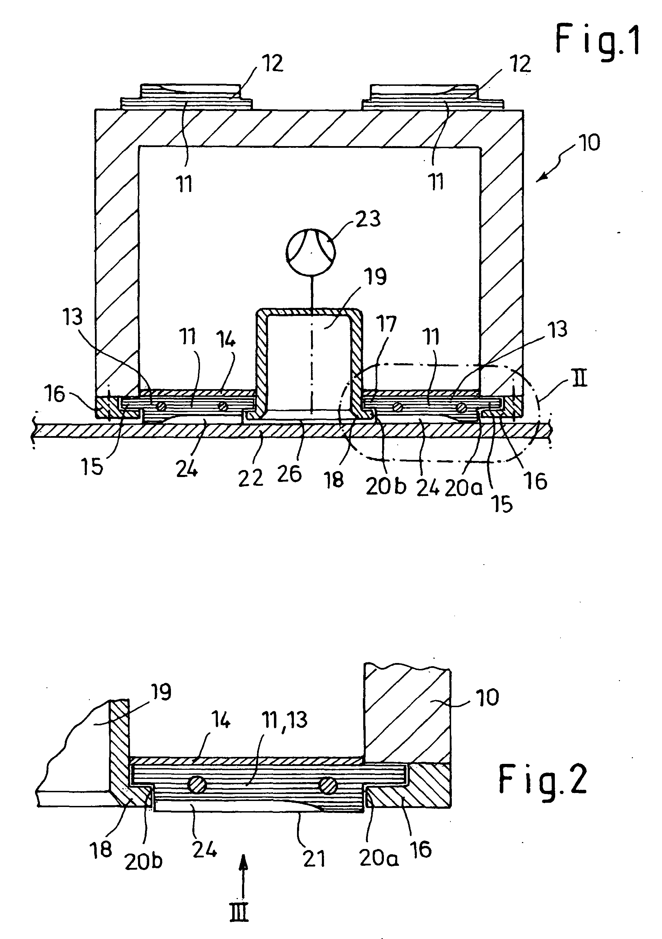

Die Erfindung ist nicht auf das dargestellte und beschriebene Ausführungsbeispiel beschränkt, sondern es ist eine Reihe von Variationen möglich, ohne den Rahmen der Erfindung zu verlassen. So ist die Größe der Unterdrucktaschen in Abhängigkeit von dem Flächengewicht der zu transportierenden Transportgüter und dem von der Unterdruckeinrichtung erzeugbaren Unterdruck variabel gestaltbar. Die Unterdrucktaschen müssen auch nicht senkrecht.zur Längsrichtung der Transportriemen verlaufen, sondern können auch mehr oder weniger schräg angeordnet werden. Die erfindungsgemäßen Transportriemen können auch ohne weiteres bei sogenannten Kombiförderern zum Einsatz kommen, bei denen der Transport der Bleche od.dgl. wahlweise mit Unterdruck oder mittels Magnetkraft erfolgt, die von im Inneren der Tragkonstruktion angeordneten Magneteinheiten erzeugt wird und ferromagnetische Bleche durch die Transportriemen hindurch gegen diese anzieht. Unter Unterdruckeinrichtung im Sinne der Erfindung ist grundsätzlich jede Einrichtung zu verstehen, die seitlich neben dem bzw. den Transportriemen einen Unterdruck zum Halten der zu transportierenden Bleche o.dgl. erzeugt. Bei dem beschriebenen Ausführungsbeispiel besteht die Unterdruckeinrichtung im wesentlichen aus dem sich zwischen den beiden Transportriemen ausbildenden Haltekanal 26, der von dem Gebläse 23 mit Unterdruck beaufschlagt wird; es versteht sich aber, daß für die Unterdruckerzeugung kein durchgehender Kanal erforderlich ist und es auch nicht notwendig ist, daß sich das den Unterdruck erzeugende Aggregat im Inneren des Förderers befindet, wie dies bei der Darstellung des Gebläses in Fig.1 angedeutet ist. Vielmehr können solche unterdruckerzeugenden Aggregate, bei denen es sich beispielsweise auch um Ejektoren o.dgl. handeln kann, natürlich auch außerhalb und/oder innerhalb der Tragkonstruktion angeordnet sein.

## Patentansprüche

1. Vorrichtung für den insbesondere hängenden Transport von Transportgütern (22) mittels Unterdruck, mit mindestens einem umlaufenden Transportriemen (11), an dessen außenliegender Kontaktseite (21) sich die zu transportierenden Transportgüter (22) während des Transports anlegen, und mit mindestens einer seitlich neben dem Transportriemen (11) wirksamen Unterdruckeinrichtung (19), **dadurch gekennzeichnet, daß** der Transportriemen (11) an seiner Kontaktseite (21) mit einerseits zum Transportgut (22) und andererseits zur Unterdruckeinrichtung (19) hin offenen Unterdrucktaschen (24) versehen ist.

2. Transportriemen für einen Vakuumförderer nach Anspruch 1, **dadurch gekennzeichnet, daß** er an seiner im Einbauzustand am Vakuumförderer zum zu transportierenden Transportgut (22) hin weisenden Kontaktseite (21) mit einerseits zu einer der beiden Längsseiten (17) und andererseits zum Transportgut (22) hin offenen Unterdrucktaschen (24) versehen ist.

3. Vorrichtung oder Transportriemen nach Anspruch 1 oder 2, **dadurch gekennzeichnet, daß** die Unterdrucktaschen (24) im wesentlichen quer zur Längsrichtung (25) des Transportriemens (11) verlaufen.

4. Vorrichtung oder Transportriemen nach einem der Ansprüche 1 bis 3, **dadurch gekennzeichnet, daß** die Unterdrucktaschen (24) in Form von flachen zur Seite der Unterdruckeinrichtung (19) hin offenen Nuten in der Kontaktseite (21) des Transportriemens (11) angeordnet sind.

5. Vorrichtung oder Transportriemen nach einem der Ansprüche 1 bis 4, **dadurch gekennzeichnet, daß** die Unterdrucktaschen (24) eine im Verhältnis zu ihrem Volumen große wirksame Fläche zum Transportgut (22) hin aufweisen.

6. Vorrichtung oder Transportriemen nach einem der Ansprüche 1 bis 5, **dadurch gekennzeichnet, daß** die Tiefe der Unterdrucktaschen (24) ausgehend von ihrer zur Unterdruckeinrichtung (19) hin weisenden, offenen Seite (17) zu ihrem gegenüberliegenden Ende hin abnimmt.

7. Vorrichtung oder Transportriemen nach einem der Ansprüche 1 bis 6, **dadurch gekennzeichnet, daß** sich die Unterdrucktaschen (24) über mindestens die halbe Breite des Transportriemens (11) erstrecken.

8. Vorrichtung oder Transportriemen nach einem der Ansprüche 1 bis 7, **dadurch gekennzeichnet, daß** die Unterdrucktaschen (24) in regelmäßigen Abständen an der Kontaktseite (21) des Transportriemens (11) angeordnet sind.

9. Vorrichtung oder Transportriemen nach einem der Ansprüche 1 bis 8, **dadurch gekennzeichnet, daß** der Abstand zwischen zwei aufeinander folgenden Unterdrucktaschen (24) gleich groß oder größer ist als deren Abmessung in Längsrichtung des Transportriemens.

10. Vorrichtung nach einem der Ansprüche 1 bis 9, **dadurch gekennzeichnet, daß** zu beiden Seiten der Unterdruckeinrichtung (19) je ein Transportriemen (11) angeordnet ist, deren Unterdrucktaschen (24) zur dazwischen angeordneten Unterdruckeinrichtung (19) hin offen sind.

## Claims

1. Apparatus for transporting articles (22) in particular in a hanging state by means of negative pressure, having at least one circulating transporting belt (11), the articles (22) which are to be transported being positioned against the outer, contact side (21) thereof during transportation, and having at least one negative-pressure arrangement (19) which is active laterally alongside the transporting belt (11), **characterized in that**, on its contact side (21), the transporting belt (11) is provided with negative-pressure pockets (24) which are open on the one hand, in the direction of the articles (22) and, on the other hand, in the direction of the negative-pressure arrangement (19).

2. Transporting belt for a vacuum conveyer according to Claim 1, **characterized in that** on its contact side (21), which in its installed state in the vacuum conveyer is oriented in the direction of the articles (22) which are to be transported, it is provided with negative-pressure pockets (24) which are open, on the one hand, in the direction of one of the two longitudinal sides (17) and, on the other hand, in the direction of the article (22).

3. Apparatus or transporting belt according to Claim 1 or 2, **characterized in that** the negative-pressure pockets (24) run essentially transversely to the longitudinal direction (25) of the transporting belt (11).

4. Apparatus or transporting belt according to one of Claims 1 to 3, **characterized in that** the negative-pressure pockets (24) are arranged in the form of flat grooves, which are open in the direction of the side of negative-pressure arrangement (19), in the contact side (21) of the transporting belt (11).

5. Apparatus or transporting belt according to one of Claims 1 to 4, **characterized in that** the negative-pressure pockets (24) have, in comparison with their volume, a large effective surface area oriented in the direction of the articles (22).

6. Apparatus or transporting belt according to one of Claims 1 to 5, **characterized in that**, starting from the open side (17) of the negative-pressure pockets (24), this open side being oriented in the direction of the negative-pressure arrangement (19), the depth of the negative-pressure pockets (24) decreases towards their opposite end.

7. Apparatus or transporting belt according to one of Claims 1 to 6, **characterized in that** the negative-pressure pockets (24) extend over at least half the width of the transporting belt (11).

8. Apparatus or transporting belt according to one of Claims 1 to 7, **characterized in that** the negative-pressure pockets (24) are arranged at regular spacings on the contact side (21) of the transporting belt (11).

9. Apparatus or transporting belt according to one of Claims 1 to 8, **characterized in that** the spacing between two successive negative-pressure pockets (24) is equal to, or greater than, the dimensioning of the negative-pressure pockets in the longitudinal direction of the transporting belt.

10. Apparatus according to one of Claims 1 to 9, **characterized by** the provision, on either side of the negative-pressure arrangement (19), of a respective transporting belt (11), of which the negative-pressure pockets (24) are open in the direction of the negative-pressure arrangement (19) provided therebetween.

## Revendications

1. Dispositif pour le transport de marchandises (22) par dépression, en particulier suspendu, comprenant au moins une courroie de transport (11) en circulation, ayant une face de contact (21) située à l'extérieur sur laquelle les marchandises (22) à transporter s'appliquent pendant le transport, et comprenant au moins un dispositif de dépression (19) faisant effet latéralement près de la courroie de transport (11), **caractérisé en ce que** la courroie de transport (11) est munie sur sa face de contact (21) de poches de dépression (24) ouvertes d'une part sur la marchandise (22) et d'autre part sur le dispositif de dépression (19).

2. Courroie de transport pour un convoyeur à vide selon la revendication 1, **caractérisée en ce qu'**elle est munie sur sa face de contact (21), se tournant vers les marchandises (22) à transporter dans l'état d'installation sur le convoyeur à vide, de poches de dépression (24) ouvertes d'une part sur l'un des deux côtés longitudinaux (17) et d'autre part sur la marchandise (22).

3. Dispositif ou courroie de transport selon la revendication 1 ou 2, **caractérisé en ce que** les poches de dépression (24) s'étendent sensiblement transversalement par rapport à la direction longitudinale (25) de la courroie de transport (11).

4. Dispositif ou courroie de transport selon l'une quelconque des revendications 1 à 3, **caractérisé en ce que** les poches de dépression (24) sont agencées en forme de rainures plates dans la face de contact (21) de la courroie de transport (11), et ouvertes vers le côté du dispositif de dépression (19).

5. Dispositif ou courroie de transport selon l'une quelconque des revendications 1 à 4, **caractérisé en ce que** les poches de dépression (24) présentent relativement à leur volume une grande surface efficace vers les marchandises (22).

6. Dispositif ou courroie de transport selon l'une quelconque des revendications 1 à 5, **caractérisé en ce que** la profondeur des poches de dépression (24) décroît en partant de leur côté (17) s'ouvrant vers le dispositif de dépression (19) jusqu'à leur extrémité opposée.

7. Dispositif ou courroie de transport selon l'une quelconque des revendications 1 à 6, **caractérisé en ce que** les poches de dépression (24) s'étendent sur au moins la moitié de la largeur de la courroie de transport (11).

8. Dispositif ou courroie de transport selon l'une quelconque des revendications 1 à 7, **caractérisé en ce que** les poches de dépression (24) sont agencées à intervalles réguliers sur la face de contact (21) de la courroie de transport (11).

9. Dispositif ou courroie de transport selon l'une quelconque des revendications 1 à 8, **caractérisé en ce que** la distance entre deux poches de dépression (24) successives est égale ou plus grande que leur dimension dans la direction longitudinale de la courroie de transport.

10. Dispositif selon l'une quelconque des revendications 1 à 9, **caractérisé en ce que** des deux côtés du dispositif de dépression (19) est agencée une courroie de transport (11), dont les poches de dépression (24) s'ouvrent sur le dispositif de dépression (19) agencé entre elles.
